# EUROPEAN PATENT SPECIFICATION

(11) **EP 3 000 575 B1**
(45) Date of publication and mention of the grant of the patent: **14.04.2021**
(21) Application number: 14186912.3
(22) Date of filing: 29.09.2014
(51) Int. Cl.: B29C 41/22, B29C 37/00, B29C 41/18, B29C 33/00, B29L 31/30

(54) **Device for partially covering a surface of a ferromagnetic mould and method for manufacturing a multi-coloured skin of a vehicle trim part in a ferromagnetic mould**
Vorrichtung zum teilweisen Beschichten der Oberfläche einer ferromagnetischen Form und Verfahren zur Herstellung einer mehrfarbigen Haut eines Fahrzeugverkleidungsteils in einer ferromagnetischen Form
Dispositif pour recouvrir partiellement la surface d'un moule ferromagnétique et procédé de fabrication d'une peau multicolore d'une pièce de garniture d'un véhicule dans un moule ferromagnétique

(43) Date of publication of application: 30.03.2016
(73) Proprietor: Faurecia Innenraum Systeme GmbH, 76767 Hagenbach (DE); Ateliers Cini, 54510 Tomblaine (FR)
(72) Inventor: Julien, Alain, 23510 Roches les Blamont (FR); Kaibiche, Mohamed, 67480 Rountzenheim (FR); Cini, Jérôme, 54770 Laitre sous Amance (FR)
(74) Representative: Pfenning, Meinig & Partner mbB

(56) References cited:
- EP-B1- 0 804 327
- WO-A2-2004/080685
- DE-A1-102011 119 743
- JP-A- H02 141 213
- JP-A- 2000 052 364
- US-A1- 2004 099 988

## Description

The invention relates to a device for partially covering a surface of a ferromagnetic mould and to a method for manufacturing a multi-coloured skin of a vehicle trim part in a ferromagnetic mould.

For vehicle trim parts there is a demand for skins displaying several different colours on a visible side of the trim part. A surface layer of a skin displaying two different colours may be obtained by an in-mould painting (IMP) process. According to the prior art as disclosed in EP 0 804 327 B1 a first layer forming material having a first colour is sprayed first onto a first portion of the mould surface while shielding off a second portion of the mould surface by means of a mask. In a next step, the mask is removed and a second layer forming material having a second colour different from the first colour is sprayed onto the second portion of the mould surface and partially onto the back of the previously sprayed layer. The first layer forming material thus has an edge which is situated underneath the layer of the second layer forming material and which defines a colour parting line between the first and the second surface portion of the surface layer. A drawback of this known method is that the parting line between the two coloured portions is not always sufficiently sharp due to sputtering or scattering of paint underneath the mask. EP 0 804 327 B1 therefore discloses providing the parting line between the two colours onto an upstanding ridge of a mould surface in order to hide the parting line from sight. The actual parting line is located in a groove in the surface layer of the trim part.

However, due to the width of the groove, a colour transition is still somewhat visible so that a need remains to achieve a sharp transition between the different colours. Further, it is difficult to master the colour separation when using a mould with a complex three dimensional geometry, including e.g. undercuts or narrow shapes. In order to obtain a sharp colour separation, the mask geometry has to be tailored accurately to the three-dimensional shape of the mould surface. Any deviation in geometry will entail an inaccurate colour transition. Also, geometries of different tools may vary and require use of different masks leading to increased production costs.

US 2004/099988 A1 describes a method of making a multi-layered trim component for attachment to a structure of a vehicle. The method includes providing a mold having a cavity formed therein which defining first and second surfaces. The mask is magnetically secured to the mold to cover the first surface. A first material is applied in the cavity so as to form a first layer conforming to the second surface. The mask is removed from the cavity of the mold. A second material is then applied in the cavity so as to form a second layer conforming to the first surface.

DE 10 2011119 743 A1 discloses a ferromagnetic mould comprising a fixed divider and a movable divider which can be attached to the fixed divider. The surface of the mould can be partially covered by a mask.

WO 2004/080685 A2 discloses a method for producing a multi-coloured, multi-layered moulded plastic part by rotation sintering, sputtering or casting. In this method, a first raw pulverulent material is introduced into a mould, whose geometry corresponds to that of the moulded plastic part. An elastic guard is provided in the galvano mould in the locations that do not require the presence of the first raw pulverulent material. Said guard lies in a positive-fit against the structure of the galvano mould surface and is held in position by a magnetic field, as the guard contains magnetisable particles.

It is an object of the invention to improve a colour separation between differently coloured regions of a multi-coloured skin.

The object is solved by a device for partially covering a surface of a ferromagnetic mould according to claim 1 and a method for manufacturing a multi-coloured skin of a vehicle trim part according to claim 10. Further embodiments, characteristics and developments of the invention are characterised in the dependent claims as well as the enclosed drawings.

According to claim 1, a device for partially covering a surface of a ferromagnetic mould includes a mask comprising a flexible material adapted to contact a mould surface portion to adjust to a shape of the mould surface portion.

Due to the flexible material the mask is at least partially adapted to follow a shape of the mould surface portion, e.g. undercuts. Therefore, no additional sealing elements are required. One single mask may be used in several moulds exhibiting geometry variations of a few millimetres, for example. In addition, the mask may not break easily due to the flexible material.

The mask according to claim 1 further comprises a permanent magnet for fixing the mask to the ferromagnetic mould surface. In other words the mask comprises a magnet generating a static magnetic field outside the magnet that is configured to fix the mask to the ferromagnetic mould surface. The permanent magnet allows fixation of the mask to the mould surface and subsequent removal of the mask from the mould surface. No further fixation means are required to fix the mask to the mould surface. The permanent magnet may also include a permanently magnetised material, i.e. particles, generating a static magnetic field outside the material. Preferably, the permanent magnet may be magnetic, i.e. generate a static magnetic field outside the magnet, at least at room temperature. Further, the permanent magnet may be magnetic at temperatures up to 300° C. The magnetic field generated by the magnet usually penetrates the flexible material of the mask.

Moulds used for IMP often comprise a ferromagnetic nickel shell. Hence, the device according to claim 1 may be used for existing moulds without having to modify them. Other ferromagnetic materials are known to a skilled person and may comprise, e.g. iron or cobalt or alloys showing ferromagnetic properties. Due to the permanent magnet the mask can be fixed to portions of the ferromagnetic mould surface that are not accessible with other fixation means. Such mould portions include e.g. undercuts, holes and narrow shapes.

By using the device according to claim 1 a visually sharp parting line between two differently coloured surface portion of a skin may be obtained. A visually sharp parting line is either sharp or comprises a transition zone between the two colours which is however so narrow that, when looking at it with the naked eye, the parting line appears to be sharp. The transition zone may have a width smaller than 500 µm, more preferably smaller than 300 µm.

The magnet may directly contact the mould surface when the mask is fixed to the mould surface. Alternatively, the flexible material of the mask is located between the magnet and the mould surface. In this case, depending on the properties of the magnet and the mould surface, a layer of flexible material between the magnet and the mould surface should be chosen such that the magnet still enables fixing the mask to the mould surface. The magnet may be received in a recess formed in the flexible material of the mask. The magnet can be attached to the flexible material via an adhesive. Alternatively, it may be envisaged that the magnet is embedded in the flexible material e.g. during moulding of the flexible material. The magnet may be arranged such that a length of the magnet measures at least 1 mm or at least 5 mm, preferably at least 10 mm, in a direction parallel to the mould surface when the mask is fixed to the mould surface. The magnet may have a height perpendicular to the mould surface of at least 1 mm and/or up to 20 mm, e.g. 5 mm. The magnet may have a substantially cylindrical shape with a diameter of about 5-30 mm, e.g. 12 mm. The mask may include several magnets to improve fixation to the mould surface. A weight of the flexible material of the mask may be between 10 g and 5 kg. Depending on the size and weight of the mask the magnet may exert a magnetic force of at least 0.1 N, preferably larger than 1 N or larger than 5 N for fixing the mask to the ferromagnetic mould surface.

The device comprises several masks for covering several portions of the mould surface and a rigid cover, wherein the rigid cover is mountable on the masks, preferably on each of the masks, such that a surface portion of the mould between the masks is covered by the cover. In contrast to the mask, the rigid cover is not necessarily adapted to adjust to a shape of the mould surface. The rigid cover may be composed of a plastic and/or fibre reinforced material.

In a further embodiment the rigid cover includes a ferromagnetic region or a magnet for fixing the cover to the magnet of the mask on a side of the mask opposing the mould when the mask is fixed to the mould surface. In this way, mounting the rigid cover on the masks can be facilitated. The rigid cover may further include a magnet for fixing the cover to the ferromagnetic mould surface. The magnet in the rigid cover may have the same properties as the magnet in the mask.

In a further embodiment the mask has a first mask portion and a second mask portion, the second mask portion extending from the first mask portion at an angle to form a paint barrier. The second mask portion prevents sections of the mould which are intended not to be painted from being contaminated by paint. If said angle is chosen too large or too small, the second potion may not effectively form a spray barrier against paint. The angle between the first and the second mask portions may be less than 140°. Further, said angle may be greater than 40°. In one embodiment, said angle is about 90°. The second mask portion may be located at an end of the mask or in a centre of the mask. The first and the second sections may be connected via a bent, curved, polygonal or arc-shaped connecting part. The first mask portion may be aligned substantially parallel to the mould surface. The second mask section may comprise a handle to facilitate positioning the mask on the mould surface. The second mask portion may function as a guide when mounting the rigid cover on the mask to ensure a correct position of the rigid cover.

A further embodiment envisages the rigid cover and/or the mask to comprise a positioning sensor that is configured to detect a position of the rigid cover and/or a position of the mask on the mould surface. The sensor may be connected, e.g. wirelessly, to a control or output unit. The sensor may send a signal to the control or output unit, said signal including information about the position of the rigid cover and/or the position of the mask on the mould surface.

The flexible material may be composed of a variety of materials. It is merely important that the flexible material is adapted to contact a mould surface portion and to adjust to a shape of the mould surface portion. Preferably, the flexible material of the mask is an elastomer, e.g. polyurethane. The flexible material should be flexible enough to adapt to a shape of the mould surface. On the other hand, the flexibility should not be too large in order to ensure a sharp parting line during an in mould painting process. A hardness of the flexible material may have a value between 50 and 90 shores, preferably between 70 and 80 shores. The flexible material should be resistant to abrasion to ensure a reasonable lifetime of the mask.

The present application also relates to a method for manufacturing a multi-coloured skin of a vehicle trim part in a ferromagnetic mould. The method includes the steps of:
- covering a second mould surface portion with a mask, the mask comprising a permanent magnet and a flexible material adapted to contact the mould surface portion and to adjust to a shape of the mould surface portion,
- fixing the mask to the ferromagnetic mould surface using the magnet,
- applying a first coating with a first colour to a first mould surface portion, the first mould surface portion being different from the second mould surface portion,
- removing the mask,
- applying a second coating with a second colour to a second mould surface portion, and
- slush moulding a thermoplastic powder on the multi-coloured mould surface to form the skin.

Before the slush moulding step additional paint or plastisols may be applied to further mould surface portions. Thereby, a multi-coloured skin can be obtained.

Several mould surface portions are covered by several masks. Additionally, a rigid cover is mounted on the masks, preferably on each of the masks, such that a mould surface between the masks is covered by the rigid cover. The second mould surface portion may in this case include mould surface portions covered by both the masks and the rigid cover. After mounting the rigid cover on the masks the first coating may be applied to the first mould portion. Then, the rigid cover and the masks are removed. Hereafter the second coating may be applied to the second mould surface portion.

Alternatively, the second mould surface may only consist of the surface portion covered by the masks. The mould surface portion covered solely by the rigid cover (and thus, not by the mask) may define a third mould surface portion, onto which a third coating with a third colour may be applied before removing the masks. After applying the third coating, the masks may be removed. The second coating may then be applied to the second mould surface. Preferably, the first, second and/or third coating is sprayed or poured onto the corresponding mould surface portions. The first, second and/or third coating may be a liquid paint or a liquid plastisol.

In particular, the device for partially covering the surface of the ferromagnetic mould as described above may be used for manufacturing a multi-coloured skin for a vehicle trim part.

Other particularities and advantages of the invention are described in the following figures and description of some particular embodiments of the device and the method according to the present invention.
Figure 1 schematically shows a cross section of a multi-coloured trim part.
Figure 2A schematically illustrates a cross section of a part of a mould and a device for partially covering a surface of the mould.
Figure 2B schematically illustrates a cross section of the mould of Fig. 2A after removing the device for partially covering the surface of the mould.
Figure 3A schematically illustrates a further embodiment of a mould and a device for partially covering a surface of the mould.
Figure 3B schematically illustrates a cross section of the mould of Fig. 2A after removing a flexible mask and a rigid cover.

In the Figures, recurring features are provided with identical reference numerals.

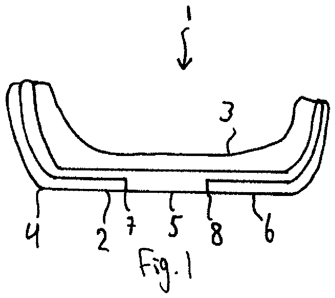

In Figure 1 a cross-section of a skin 1 of a trim part is shown. The trim part is more particularly an interior trim part for a vehicle such as a dashboard, a door panel, a console or a lid of a glove compartment, etc. The skin 1 includes a surface layer 2 on a visible side and a backing layer 3 on a back side of the skin 1. The illustrated surface layer 2 has a first surface portion 4 on a visible side having a first colour, a second surface portion 5 on a visible side having a second colour that differs from the first colour and a third surface layer 6 having a third colour that differs from both the first colour and the second colour. The first, second and third surface portions 4, 5, 6 of the surface layer 2 define parting lines 7, 8 which appear to be visually sharp to a human eye from a distance of at least 30 cm. In addition to the skin 1, the trim part may include further layers such as a fibre reinforced carrier (not shown). The skin 1 is manufactured in a slush moulding process using a slush moulding tool and a device for partially covering a mould surface.

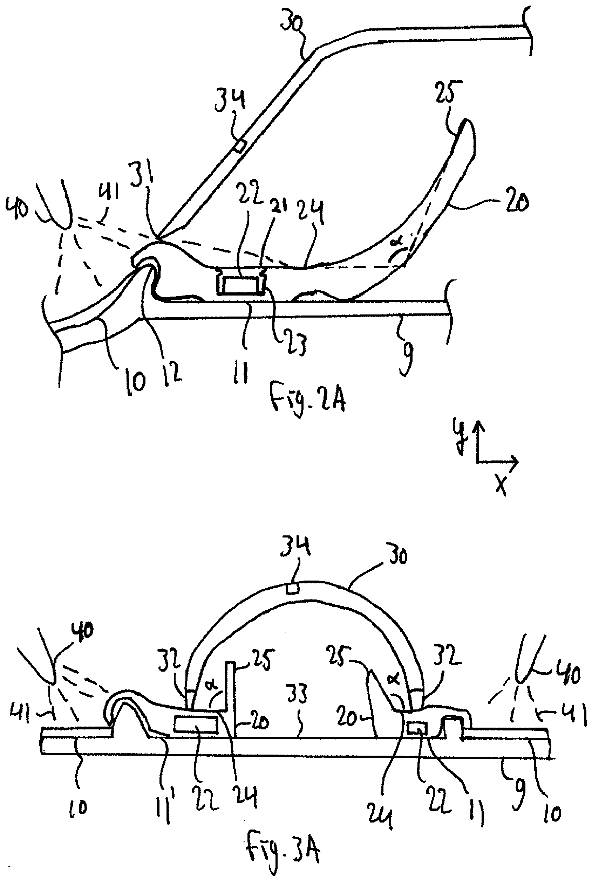

In Fig. 2A a part of a slush tool is shown for manufacturing the skin 1 shown in Fig. 1. Such a slush tool is known to a skilled person and generally includes a mould with an upper and a lower part 9, wherein in Figure 2A only the lower part 9 is shown. The lower part 9 of the mould is intended to produce the surface layer 2 of the skin 1 whilst the upper part of the mould enables closing the mould to form a mould cavity in which the backing layer 3 is produced against the back of the surface layer 2. The lower mould part 9 includes a surface with a first mould surface portion 10 and a second mould surface portion 11. The mould surface has a three-dimensional geometry and includes by way of example curved regions and a ridge 12. At least the second mould surface portion 11 includes a ferromagnetic material, usually nickel. In other embodiments, the mould surface may include other ferromagnetic materials such as iron, cobalt or ferromagnetic alloys. The second mould surface portion 11 does not need to be magnetic or partially magnetised or temporally magnetised. However, it is important that a permanent magnet 22 can stick to the mould surface portion 11.

To obtain the multi-coloured skin with visually sharp parting lines 7, 8 as shown in Fig. 1, a device for partially covering the mould surface is used. The device comprises a mask 20 and a rigid cover 30. The mask 20 covers a mould surface portion during in-mould painting of the first 10, second 11 and/or third 12 mould surface portions. The mask 20 includes a flexible material and is adapted to contact a mould surface portion and to adjust to a shape of the mould surface portion. The flexible material is made of polyurethane, but may also be composed of another elastomeric material or several elastomeric materials. The mask 20 further comprises a permanent magnet 22 which is at least partially embedded in the flexible material of the mask 20. In Fig. 2A the magnet is received in a recess 23 formed in the flexible material of the mask 20. The magnet is held in the recess 23 by a clip 21. Alternatively or additionally, the magnet 22 may be attached to the flexible material by an adhesive.

The magnet 22 may have various shapes. However, in order to maintain the flexibility of the mask 20, the dimensions of the magnet 22 may not be arbitrarily large. The dimensions of the magnet 22 can be reduced when using rare-earth magnets made from alloys of rare earth elements, said rare-earth magnets generating strong permanent magnetic fields. The magnet 22 should generate a temporally constant magnetic field large enough to fix the mask 20 to a mould surface portion during application of a paint or plastisol. On the other hand, the magnet 22 should exhibit a magnetic field small enough to facilitate easy removal of the mask 20 from the ferromagnetic mould surface after application of the paint or plastisol to the first mould surface portion 11. The magnet 22 has a cylindrical shape with a diameter of 10 mm in a direction parallel to the mould surface (in x-direction) and a height of 5 mm (in y-direction). The magnet may exert a magnetic force of 10 N to the magnetic mould.

The mask 20 has a first mask portion 24 substantially parallel to the second mould surface portion 11 and a second mask portion 25 extending from the first mask portion 24 at an angle α of approximately 112°. Due to the flexible material and depending on the shape of the second mould surface portion 11, this angle α may vary by up to 5°. The second mask portion 25 forms a spray barrier and avoids paint stains on the second mould surface portion 11 during application of a first paint to the first mould surface portion 10. The second mask portion 25 also serves as a handle for positioning the mask 20 on the second mould surface portion 11.

The mask 20 may be manufactured by a vacuum casting process allowing several copies. The flexible material of the mask 20 is adapted to follow and/or maintain a geometry variation of ± 2 mm at temperatures from around 10° C up to 70° C. Hence, the same mask 20 may be employed for several slush tools. The flexible material of the masks 20 has a hardness of 75 shores. The flexible material of the mask 20 allows covering a three dimensional mould surface having undercuts, holes or narrow shapes. Further, the permanent magnet 22 allows the fixation of the mask 20 in these undercuts, holes or narrow shapes.

As can be seen from Figure 2A, the flexible mask 20 covers only a section of the second mould surface portion 11. The rest of the second mould surface portion 11 is covered by the rigid cover 30. After fixing the mask 20 to the second mould surface portion 11, the rigid cover 30 is placed on top of the mask 20. When using several masks 20 for covering several portions of the mould surface, an edge of the rigid cover 30 is mounted on each of the masks 20 such that a surface portion of the mould 33 between the masks 20 is covered by the rigid cover 30. Hence, the flexible mask 20 is used to ensure a visually sharp parting line 7, 8 whereas the rigid cover 30 covers a section of the second mould surface not being covered by the mask 20. In the embodiment shown in Figure 2A the rigid cover 30 rests on the mask 20 and is not fixed to the mask 20. In some regions there is a gap 31 between the mask 20 and the rigid cover 30, since the rigid cover 30 is not fixed to the mask 20. During an in-mould painting process, paint may be occasionally sprayed through the gap 31. The second mask portion 25 acts as a paint barrier and shields off the second mould surface portion 11 from paint leaking through this gap 31. The rigid cover 30 comprises a positioning sensor 34 configured to detect a position of the rigid cover 30 on the mould surface. Further, the positioning sensor 34 may be configured to detect a position of the mask 20. The mask 20 may also include a positioning sensor to detect a position of the mask 20 on the mould surface (not shown). The positioning sensor 34 is wirelessly connected to a control and output unit (not shown). Via the positioning sensor 34 and the control and output unit an operator is able to check the positions of the rigid cover 30 and/or the mask 20 in the mould.

The embodiment shown in Fig. 3A differs from the embodiment shown in Fig. 2A in that two masks 20 are used. Further additional masks 20 may be used depending on the properties of the skin 1 and the shape of the mould.

In Fig. 3A the magnets 22 are embedded in the flexible material of the masks 20, e.g. during a moulding process forming the masks 20. The angle α between first 24 and second 25 portions of the mask 20 is around 90° for the mask 20 shown on the left and around 120° for the mask 20 shown on the right. Further, the rigid cover 30 includes magnets 32 for fixing the cover 30 to the magnets 22 of the masks 20 on a side of the masks 20 opposing the second mould surface 11. To promote fixation of the cover 30 to the mask 20, the magnetic north and south poles of the magnets 22, 32 are directed towards each other. The magnets 32 of the cover 30 may also be used to fix the cover 30 to the ferromagnetic mould surface. In this case, the mould surface should be plain rather than having a complex three-dimensional shape, as the cover 30 is rigid and is not adapted to adjust to a three-dimensional shape of the mould surface. Instead of a magnet 32, the cover 30 may comprise a ferromagnetic region that is disposed on top of the magnet 22 of the mask 20. This also enables fixation of the rigid cover 30 to the mask 20.

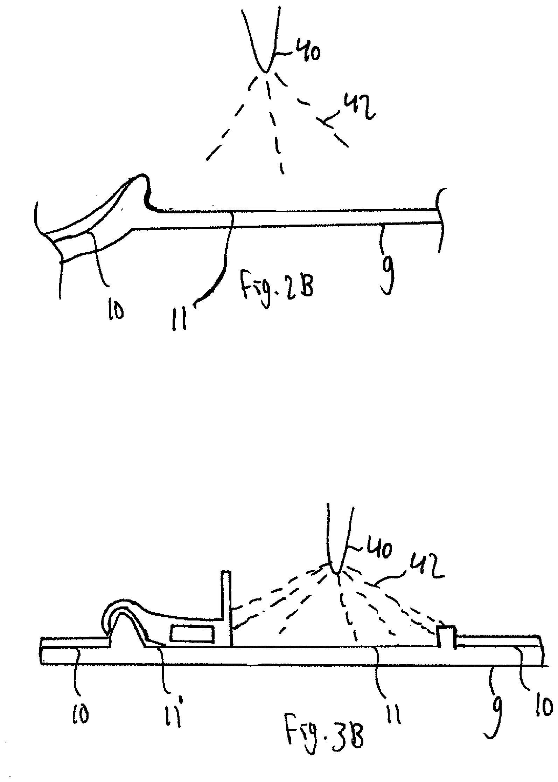

The trim part according to Figure 1 is manufactured by a method presented below. First, the mask 20 is positioned onto the second mould surface portion 11 using the second mask section 25. The flexible material of the mask 20 at least partially adjusts to the second mould surface portion 11 and at least partially contacts the second mould surface portion 11. The mask 20 is fixed to the ferromagnetic mould surface portion 11 by the magnet 22. The rigid cover 30 is mounted on the mask 20. When several masks 20 are used, the rigid cover 30 is preferably disposed on each of the masks 20 such that a mould surface 33 between the masks 20 is shielded by the rigid cover 30. Now a first paint 41 with a first colour is sprayed onto the first mould portion 10 by a nozzle 40 (cf. Figures 2A and 3A). The rigid cover 30 and the mask 20 are removed subsequently. Hereafter, a second paint 42 with a second colour is sprayed to the second mould surface portion 11 by a nozzle 40 (cf. Figures 2B and 3B). In a next step, the remaining mask may be removed (remaining mask shown in Figure 3B). A third paint with a third colour is sprayed onto a mould surface 11' not being coated with the first and the second paint (step not shown). The second 42 and/or third paint may be sprayed partially onto the back of the previously sprayed layer(s).

After applying several paints with different colours the multi-coloured surface layer is slush moulded with a thermoplastic powder to form the skin 1 of the vehicle interior trim part.

### List of reference numerals

- 1: skin
- 2: surface layer
- 3: back layer
- 4: first surface portion
- 5: second surface portion
- 6: third surface portion
- 7: parting line
- 8: parting line
- 9: lower mould part
- 10: first mould surface portion
- 11: second mould surface portion
- 12: ridge
- 20: mask
- 21: clip
- 22: magnet
- 23: recess
- 24: first mask portion
- 25: second mask portion
- 30: rigid cover
- 31: gap between rigid cover and mask
- 32: magnet
- 33: surface portion between masks
- 34: positioning sensor
- 40: nozzle
- 41: first paint
- 42: second paint

## Claims

1. Device for partially covering a surface (10, 11) of a ferromagnetic mould, said device including a mask (20) comprising a flexible material adapted to contact a mould surface portion and to adjust to a shape of the mould surface portion, the mask further comprising a permanent magnet (22) for fixing the mask (20) to the ferromagnetic mould surface (10, 11), **characterized in that** said device comprises several masks for covering several portions (11, 11') of the mould surface and a rigid cover (30), wherein the rigid cover (30) is mountable on the masks (20) such that a surface portion (33) of the mould between the masks (20) is covered by the cover (30).

2. Device according to claim 1, **characterised in that** the rigid cover (30) includes a magnet (32) for fixing the cover (30) to the ferromagnetic mould surface (10, 11).

3. Device according to claim 1 or 2, wherein the rigid cover (30) includes a ferromagnetic material or a magnet (32) for fixing the cover (30) to the magnet (22) of the mask on a side of the mask (20) opposing the mould when the mask (20) is fixed to the mould surface (10, 11).

4. Device according to one of the preceding claims, wherein the magnet (22) is arranged such that a length of the magnet (22) measures at least 1 mm in a direction parallel to the mould surface (10, 11) when the mask (20) is fixed to the mould surface (10, 11).

5. Device according to one of the preceding claims, **characterised in that** the mask (20) has a first portion (24) and a second portion (25), the second portion (25) extending from the first portion (24) at an angle to form a paint barrier.

6. Device according to one of the preceding claims, **characterised in that** the magnet (22) is embedded in the flexible material of the mask (20).

7. Device according to one of the preceding claims, wherein the flexible material of the mask (20) is an elastomer, preferably polyurethane.

8. Device according to one of the claims 1 to 7 **characterized in that** the rigid cover (30) and/or the mask (20) comprises a positioning sensor (34) configured to detect a position of the rigid cover (30) and/or a position of the mask (20) on the mould surface (10, 11).

9. Method for manufacturing a multi-coloured skin (1) of a vehicle trim part in a ferromagnetic mould, the method comprising the steps of:
- covering a second mould surface portion (11) with a mask (20), the mask (20) comprising a permanent magnet (22) and a flexible material adapted to contact the second mould surface portion (11) and to adjust to a shape of the second mould surface portion (11),
- fixing the mask (20) to the ferromagnetic mould surface (10, 11) using the magnet (22),
- applying a first coating with a first colour to a first mould surface portion (10),
- removing the mask (20),
- applying a second coating with a second colour to the second mould surface portion (11), the method being **characterized by**:
slush moulding a thermoplastic powder on the multi-coloured mould surface (10, 11) to form the skin (1), wherein several mould surface portions (10, 11) are covered by several masks (20), including the additional step:
- mounting a rigid cover (30) on the masks (20) such that a mould surface (33) between the masks (22) is covered by the rigid cover.

10. Method according to claim 9, including the additional steps:
- removing the rigid cover (30), and
- before removing the masks (20), applying a third coating with a third colour to the mould surface (33) between the masks (20).

## Patentansprüche

1. Vorrichtung zum teilweisen Abdecken einer Oberfläche (10, 11) einer ferromagnetischen Form, wobei die Vorrichtung eine Maske (20) aufweist, die ein flexibles Material umfasst, das dazu ausgelegt ist, einen Formoberflächenabschnitt zu kontaktieren und sich an eine Form des Formoberflächenabschnitts anzupassen, wobei die Maske ferner einen Dauermagneten (22) zum Befestigen der Maske (20) an der Oberfläche (10, 11) der ferromagnetischen Form umfasst, **dadurch gekennzeichnet, dass** die Vorrichtung mehrere Masken zum Abdecken verschiedener Abschnitte (11, 11') der Formoberfläche und eine starre Abdeckung (30) umfasst, wobei die starre Abdeckung (30) auf den Masken (20) montierbar ist, sodass ein Oberflächenabschnitt (33) der Form zwischen den Masken (20) von der Abdeckung (30) bedeckt ist.

2. Vorrichtung nach Anspruch 1, **dadurch gekennzeichnet, dass** die starre Abdeckung (30) einen Magneten (32) zum Befestigen der Abdeckung (30) an der Oberfläche (10, 11) der ferromagnetischen Form aufweist.

3. Vorrichtung nach Anspruch 1 oder 2, wobei die starre Abdeckung (30) ein ferromagnetisches Material oder einen Magneten (32) zum Befestigen der Abdeckung (30) an dem Magneten (22) der Maske auf einer Seite der Maske (20), der Form gegenüberliegend, wenn die Maske (20) an der Formoberfläche (10, 11) befestigt ist, aufweist.

4. Vorrichtung nach einem der vorangehenden Ansprüche, wobei der Magnet (22) so angeordnet ist, dass eine Länge des Magneten (22) in einer Richtung parallel zur Formoberfläche (10, 11) mindestens 1 mm misst, wenn die Maske (20) an der Formoberfläche (10, 11) befestigt ist.

5. Vorrichtung nach einem der vorangehenden Ansprüche, **dadurch gekennzeichnet, dass** die Maske (20) einen ersten Abschnitt (24) und einen zweiten Abschnitt (25) aufweist, wobei sich der zweite Abschnitt (25) in einem Winkel von dem ersten Abschnitt (24) erstreckt, um eine Farbbarriere auszubilden.

6. Vorrichtung nach einem der vorangehenden Ansprüche, **dadurch gekennzeichnet, dass** der Magnet (22) in das flexible Material der Maske (20) eingebettet ist.

7. Vorrichtung nach einem der vorangehenden Ansprüche, wobei das flexible Material der Maske (20) ein Elastomer ist, vorzugsweise Polyurethan.

8. Vorrichtung nach einem der Ansprüche 1 bis 7, **dadurch gekennzeichnet, dass** die starre Abdeckung (30) und/oder die Maske (20) einen Positionsbestimmungssensor (34) umfasst, dazu ausgelegt, eine Position der starren Abdeckung (30) und/oder eine Position der Maske (20) auf der Formoberfläche (10, 11) zu erfassen.

9. Verfahren zur Herstellung einer mehrfarbigen Haut (1) eines Fahrzeugverkleidungsteils in einer ferromagnetischen Form, wobei das Verfahren folgende Schritte umfasst:
- Abdecken eines zweiten Formoberflächenabschnitts (11) mit einer Maske (20), wobei die Maske (20) einen Dauermagneten (22) und ein flexibles Material umfasst, das dazu ausgelegt ist, den zweiten Formoberflächenabschnitt (11) zu kontaktieren und sich an eine Form des zweiten Formoberflächenabschnitts (11) anzupassen,
- Befestigen der Maske (20) an der Oberfläche (10, 11) der ferromagnetischen Form unter Verwendung des Magneten (22),
- Auftragen einer ersten Beschichtung mit einer ersten Farbe auf einen ersten Formoberflächenabschnitt (10),
- Entfernen der Maske (20),
- Auftragen einer zweiten Beschichtung mit einer zweiten Farbe auf den zweiten Formoberflächenabschnitt (11),
wobei das Verfahren **gekennzeichnet ist durch**:
Slush-Moulding eines thermoplastischen Pulvers auf der mehrfarbigen Formoberfläche (10, 11), um die Haut (1) auszubilden,
wobei mehrere Formoberflächenabschnitte (10, 11) von mehreren Masken (20) bedeckt sind, umfassend den zusätzlichen Schritt:
- Montieren einer starren Abdeckung (30) auf den Masken (20), sodass eine Formoberfläche (33) zwischen den Masken (22) von der starren Abdeckung bedeckt ist.

10. Verfahren nach Anspruch 9, umfassend die zusätzlichen Schritte:
- Entfernen der starren Abdeckung (30), und
- vor dem Entfernen der Masken (20) Auftragen einer dritten Beschichtung mit einer dritten Farbe auf die Formoberfläche (33) zwischen den Masken (20).

## Revendications

1. Dispositif pour recouvrir partiellement une surface (10, 11) d'un moule ferromagnétique, ledit dispositif incluant un masque (20) qui comprend un matériau souple qui est adapté pour être mis en contact avec une section de surface de moule et pour être ajusté par adaptation par rapport à une forme de la section de surface de moule, le masque comprenant en outre un aimant permanent (22) pour fixer le masque (20) sur la surface de moule ferromagnétique (10, 11), **caractérisé en ce que** ledit dispositif comprend plusieurs masques pour recouvrir plusieurs sections (11, 11') de la surface de moule et un moyen de recouvrement rigide (30), dans lequel le moyen de recouvrement rigide (30) peut être monté sur les masques (20) de telle sorte qu'une section de surface (33) du moule entre les masques (20) soit recouverte par le moyen de recouvrement (30).

2. Dispositif selon la revendication 1, **caractérisé en ce que** le moyen de recouvrement rigide (30) inclut un aimant (32) pour fixer le moyen de recouvrement (30) sur la surface de moule ferromagnétique (10, 11).

3. Dispositif selon la revendication 1 ou 2, dans lequel le moyen de recouvrement rigide (30) inclut un matériau ferromagnétique ou un aimant (32) pour fixer le moyen de recouvrement (30) sur l'aimant (22) du masque sur un côté du masque (20) qui est opposé au moule lorsque le masque (20) est fixé sur la surface de moule (10, 11).

4. Dispositif selon l'une quelconque des revendications précédentes, dans lequel l'aimant (22) est agencé de telle sorte qu'une longueur de l'aimant (22) mesure au moins 1 mm dans une direction qui est parallèle à la surface de moule (10, 11) lorsque le masque (20) est fixé sur la surface de moule (10, 11).

5. Dispositif selon l'une quelconque des revendications précédentes, **caractérisé en ce que** le masque (20) comporte une première section (24) et une seconde section (25), la seconde section (25) s'étendant depuis la première section (24) selon un angle pour former une barrière vis-à-vis d'une peinture.

6. Dispositif selon l'une quelconque des revendications précédentes, **caractérisé en ce que** l'aimant (22) est intégré à l'intérieur du matériau souple du masque (20).

7. Dispositif selon l'une quelconque des revendications précédentes, dans lequel le matériau souple du masque (20) est un élastomère, de préférence un polyuréthane.

8. Dispositif selon l'une quelconque des revendications 1 à 7, **caractérisé en ce que** le moyen de recouvrement rigide (30) et/ou le masque (20) comprennent/comprend un capteur de positionnement (34) qui est configuré pour détecter une position du moyen de recouvrement rigide (30) et/ou une position du masque (20) sur la surface de moule (10, 11).

9. Procédé pour fabriquer une peau multicolore (1) d'une partie de garniture de véhicule dans un moule ferromagnétique, le procédé comprenant les étapes constituées par :
- le recouvrement d'une seconde section de surface de moule (11) au moyen d'un masque (20), le masque (20) comprenant un aimant permanent (22) et un matériau souple qui est adapté pour être mis en contact avec la seconde section de surface de moule (11) et pour être ajusté par adaptation par rapport à une forme de la seconde section de surface de moule (11) ;
- la fixation du masque (20) sur la surface de moule ferromagnétique (10, 11) en utilisant l'aimant (22) ;
- l'application d'un premier revêtement qui présente une première couleur sur une première section de surface de moule (10) ;
- l'enlèvement du masque (20) ; et
- l'application d'un deuxième revêtement qui présente une deuxième couleur sur la seconde section de surface de moule (11) ;
le procédé étant **caractérisé par** :
- le moulage par embouage d'une poudre thermoplastique sur la surface de moule multicolore (10, 11) de manière à former la peau (1) ;
dans lequel plusieurs sections de surface de moule (10, 11) sont recouvertes par plusieurs masques (20), incluant l'étape additionnelle constituée par :
- le montage d'un moyen de recouvrement rigide (30) sur les masques (20) de telle sorte qu'une surface de moule (33) entre les masques (22) soit recouverte par le moyen de recouvrement rigide.

10. Procédé selon la revendication 9, incluant les étapes additionnelles constituées par :
- l'enlèvement du moyen de recouvrement rigide (30) ; et
- avant l'enlèvement des masques (20), l'application d'un troisième revêtement qui présente une troisième couleur sur la surface de moule (33) entre les masques (20).
